# EUROPÄISCHE PATENTANMELDUNG

(11) **EP 3 437 802 A1**
(43) Veröffentlichungstag der Anmeldung: **06.02.2019**
(21) Anmeldenummer: 17184093.7
(22) Anmeldetag: 31.07.2017
(51) Int. Cl.: B25B 23/04, B23P 19/06, B25B 23/08, B25B 23/10, B25B 15/00, H01M 10/00, B25G 1/12

(54) **SCHRAUBGERÄT**

(71) Anmelder: Weber Schraubautomaten GmbH, 82515 Wolfratshausen (DE)
(72) Erfinder: Schönig, Christian, 82377 Penzberg (DE); Kroll, Franz, 82544 Egling (DE)
(74) Vertreter: Manitz Finsterwald Patentanwälte PartmbB

(57) **Zusammenfassung**

Die Erfindung betrifft ein Schraubgerät (10) mit einem Eindrehwerkzeug (16) und einem Gehäuse (18). In dem Gehäuse (18) ist eine Antriebseinheit (28) angeordneten, welche einen Rotationsantrieb zum Rotieren des Eindrehwerkzeugs um eine Rotationsachse (26) und einen Linearantrieb zum Verfahren des Eindrehwerkzeugs entlang der Rotationsachse (26) umfasst. Das Schraubgerät (10) umfasst ferner eine Zuführeinrichtung zur automatischen Zuführung von Verbindungselementen (14) zu dem Eindrehwerkzeug (16). Um beispielsweise Batteriemodule sicher montieren zu können, ist wenigstens ein Isolationselement (36) vorgesehen, welches einen Stromfluss über das Eindrehwerkzeug (16) zu anderen Bauteilen des Schraubgeräts (10), beispielsweise zu der Antriebseinheit (28), zu dem Gehäuse (18), zu der Zuführeinrichtung und/oder zu einem Sensor, verhindert.

## Beschreibung

Die vorliegende Erfindung betrifft ein Schraubgerät mit einem Eindrehwerkzeug und einer Zuführeinrichtung zur automatischen Zuführung von Verbindungselementen zu dem Eindrehwerkzeug.

Aus dem Stand der Technik sind mehrere Varianten von Schraubgeräten bekannt, welche mit einer automatischen Zuführung von Verbindungselementen ausgestattet sind. Diese werden unter anderem durch die Art und Weise unterschieden, wie die Verbindungselemente zugeführt werden und wie die Verbindungselemente gehalten werden. Bei der automatischen Zuführung unterscheidet man zwischen einer "Pick and Place"-Zuführung, bei der die Verbindungselemente an einer Bereitstellungseinheit bereitgestellt werden und entweder ein Schrauber zur Bereitstellungseinheit bewegt wird oder die Bereitstellungseinheit zum Schrauber bewegt wird, und einem sogenannten Zuführkopf, bei dem die Verbindungselemente pneumatische einem Zuführkopf des Schraubgeräts zugeführt werden und während einer Vorschubbewegung des Eindrehwerkzeugs aufgenommen werden. Prinzipiell sind aber auch andere Arten der automatischen Zuführung denkbar. Bezüglich der Art und Weise, wie die Verbindungselemente für die Aufnahme durch das Eindrehwerkzeug gehalten werden, sind ebenfalls mehrere Varianten bekannt. Bei einem sogenannten Klinkenschrauber wird ein automatisch zugeführtes Verbindungselement mittels durch das Eindrehwerkzeug aufdrückbare Klinken gehalten. Bei einem sogenannten Vakuumschrauber wird ein automatisch zugeführtes Verbindungselement mittels Unterdruck gehalten. Alternativ oder zusätzlich ist auch möglich, ein automatisch zugeführtes Verbindungselement durch einen Magneten zu halten, sofern das Verbindungselement aus einem ferromagnetischen Material gebildet ist.

All diese bekannten Schraubgeräte mit automatischer Zuführung haben den Nachteil, dass sie sich nicht für die Montage von Hochvolt-Batterien, wie beispielsweise Batterien für Elektrofahrzeuge, eignen, weil sie nicht ausreichend elektrisch isoliert sind.

Es ist daher eine Aufgabe der Erfindung, ein Schraubgerät mit automatischer Zuführung bereitzustellen, mittels welchem sich elektrische Hochvolt-Komponenten, wie beispielsweise Batterien für Elektrofahrzeuge, einfacher und sicherer montieren lassen.

Die Aufgabe wird gelöst durch ein Schraubgerät mit den Merkmalen des Anspruchs 1 und insbesondere dadurch, dass wenigstens ein Isolationselement vorgesehen ist, welches einen Stromfluss über das Eindrehwerkzeug zu anderen Bauteilen des Schraubgeräts, beispielsweise zu einer Antriebseinheit, einem Gehäuse, einer Zuführeinrichtung und/oder zu einem Sensor, verhindert.

Der Erfindung liegt der allgemeine Gedanke zugrunde, eine elektrische Hochvolt-Komponente, an der ein Verbindungselement gesetzt werden soll, gegenüber Bauteilen des Schraubgeräts elektrisch zu isolieren, um zu verhindern, dass elektrischer Strom über das Eindrehwerkzeug zu anderen Bauteilen, wie z.B. die Antriebseinheit, das Gehäuse, die Zuführeinrichtung oder Sensoren fließen kann. Hierdurch wird zum einen sichergestellt, dass die anderen Bauteile des Schraubgeräts, insbesondere Sensoren und elektrische Antriebe, nicht beschädigt werden. Zum anderen wird sichergestellt, dass keine Spannung an dem Gehäuse des Schraubgeräts anliegt und Personen durch ein Berühren des Gehäuses keinen Stromschlag erleiden.

Vorteilhafte Ausbildungen der Erfindung sind den Unteransprüchen, der Beschreibung und den Zeichnungen zu entnehmen.

Gemäß einer Ausführungsform ist das Isolationselement dazu vorgesehen, einen Stromfluss über das Eindrehwerkzeug zu der Antriebseinheit zu verhindern. Dies schützt die Antriebseinheit, insbesondere wenn es sich um einen elektrischen Antriebsmotor handelt, vor ungewünschten Überspannungen. Alternativ oder zusätzlich kann das Isolationselement dazu vorgesehen sein, einen Stromfluss über das Eindrehwerkzeug zu dem Gehäuse und/oder zu der Zuführeinrichtung zu verhindern. Hierdurch bleibt in dem Fall, dass das Eindrehwerkzeug mit einer Spannungsquelle in Kontakt kommt, das Gehäuse und/oder die Zuführeinrichtung im Wesentlichen spannungsfrei. Auch Sensoren des Schraubgeräts, beispielsweise Sensoren, die den Vorschub, die Vorschubkraft und/oder die Rotationsgeschwindigkeit des Eindrehwerkzeugs und/oder das vom Antriebsmotor erzeugte Drehmoment detektieren, werden durch das Isolationselement vor Überspannungen geschützt.

Gemäß einer weiteren Ausführungsform ist das Gehäuse geerdet. Mit anderen Worten liegt das Gehäuse auf Massepotenzial. Entsprechendes kann für die Antriebseinheit und/oder die Zuführeinrichtung gelten. Die Erdung des Gehäuses, der Antriebseinheit und/oder der Zuführeinrichtung hat den Vorteil, dass bei einer Fehlfunktion und einer daraus resultierenden Spannung an dem Gehäuse, der Antriebseinheit und/oder der Zuführeinrichtung die Spannung über die Masse abgebaut wird. Dies dient vor allem dem Schutz von Personen, welche in Berührung mit dem Gehäuse oder einer anderen Komponente des Schraubgeräts kommen.

Gemäß einer bevorzugten Ausführungsform weist das Isolationselement eine Luftstrecke von mindestens 10,4 mm auf. In anderen Worten sind ein potentiell mit Spannung behaftetes Teil, wie beispielsweise das Verbindungselement oder das Eindrehwerkzeug, und ein durch das Isolationselement zu isolierendes Bauteil des Schraubgeräts so weit voneinander beabstandet angeordnet, dass ein Strom 10,4 mm durch Luft fließen müsste, um das Isolationselement zu überwinden. Hierdurch wird zumindest bis Spannungen in Höhe von 1400 VDC wirksam vermieden, dass Strom durch die Luft um das Isolationselement herum fließen und so das Isolationselement durch die angrenzende Luft umgehen kann.

Ferner weist das Isolationselement bevorzugt eine minimale Kriechstrecke entsprechend der folgenden Tabelle auf:

| Isolierstoff Klasse | CTI | Kriechstrecke |
|---|---|---|
| I | ≥ 600 | ≥ 16 mm |
| II | 400 - 600 | ≥ 22 mm |
| IIIa | 175 - 400 | ≥ 32 mm |
| IIIb | 100 - 175 | ≥ 32 mm |

In anderen Worten besteht das Isolationselement an seiner Oberfläche aus einem Material, welches abhängig von seiner Kriechstromfestigkeit eine minimale Kriechstrecke entsprechend der Tabelle aufweist. Die Kriechstromfestigkeit, welche mittels des CTI-Werts bestimmt wird, kennzeichnet die Isolationsfestigkeit der Oberfläche bzw. Kriechstrecke von Isolierstoffen, insbesondere unter Einwirkung von Feuchtigkeit und Verunreinigungen. Die Kriechstromfestigkeit definiert den maximalen Kriechstrom, der sich unter genormten Prüfbedingungen, d.h. vorgegebene Spannung und vorgegebenes Leitschichtmaterial, in einer definierten Prüfanordnung, d.h. definierter Elektrodenabstand und definierte Elektrodenform, einstellen darf. Eine hohe Kriechstromfestigkeit bedeutet, dass messbare Ströme auf der Oberfläche des Prüfkörpers erst bei Anlegen einer entsprechend hohen Spannung entstehen.

Das Messverfahren zur Bestimmung des CTI-Werts ist in der IEC 60112 geregelt. Der CTI-Wert sagt aus, bis zu welcher Spannung, gemessen in Volt, das Basismaterial kein Tracking zeigt, wenn 50 Tropfen genormter Elektrolytlösungen (A oder B, dementsprechend KA- oder KB-Wert) aufgetropft werden. Gemessen wird auf einer abgeätzten Oberfläche, wobei alle 30 Sekunden ein Tropfen zwischen zwei Platin-Elektroden fällt.

Abhängig von dem CTI-Wert des Materials des Isolationselements muss eine minimale Kriechstrecke entsprechend der oben gezeigten Tabelle gewählt werden. Rein beispielhaft soll nun erklärt werden, wie die korrekte minimale Kriechstrecke anhand der Tabelle bestimmt werden soll. Angenommen, das Isolationselement besteht aus PTFE (Polytetrafluorethylen), so muss zunächst der CTI-Wert des Materials bestimmt werden. Bis zu Spannungen von 600V ist der CTI-Wert genormt und kann mittels der Norm IEC 60112 ermittelt oder aus den hierzu bestimmten Tabellen abgelesen werden. Der CTI-Wert für PTFE beträgt typischerweise 600. Somit fällt PTFE in die Isolierstoffklasse I und eine minimale Kriechstrecke von 16 mm ist gemäß der Tabelle vorzusehen.

Zur besonders wirksamen Vermeidung eines Durchschlags durch das Isolationselement, kann das Isolationselement ein Material umfassen, welches eine Durchschlagfestigkeit von mindestens 10kV Stehstoßspannung aufweist.

Gemäß einer weiteren Ausführungsform umfasst das Isolationselement ein Material, welches zu der Gruppe der teilentladungsfreien Isolatoren gehört. Insbesondere besteht das Isolationselement aus einem Material, welches zu der Gruppe der teilentladungsfreien Isolatoren gehört. Speziell kann das Isolationselement ein Material umfassen, welches zu der Gruppe der Keramiken gehört. Insbesondere kann das Isolationselement aus einem Material bestehen, welches zu der Gruppe der Keramiken gehört. Keramiken sind insofern vorteilhaft, als sie verschleißfest sind und zugleich isolierend wirken.

Gemäß einer bevorzugten Ausführungsform umfasst das Schraubgerät einen Aufnahmestab, dessen eines Ende mit der Antriebseinheit gekoppelt ist und an dessen anderem Ende das Eindrehwerkzeug angebracht ist.

Bevorzugt ist das Isolationselement in axialer Richtung zwischen dem Eindrehwerkzeug und der Antriebseinheit angeordnet. Für eine besonders einfache und zuverlässige elektrische Trennung des Eindrehwerkzeugs vom Rest des Schraubgeräts kann das Isolationselement in den Aufnahmestab integriert sein. Vorteilhafterweise ist das Isolationselement im Bereich des Endes des Aufnahmestabs angeordnet, an welchem das Eindrehwerkzeug angebracht ist. Hierdurch wird sichergestellt, dass allenfalls ein kleiner Teil des Schraubgeräts, nämlich das Eindrehwerkzeug und gegebenenfalls ein an dieses angrenzender Endabschnitt des Aufnahmestabs, spannungsbehaftet ist. Es ist auch denkbar, den gesamten Aufnahmestab aus isolierendem Material zu fertigen oder das Isolationselement zwischen das Eindrehwerkzeug und den Aufnahmestab zu schalten.

Ist das Isolationselement zwischen das Eindrehwerkzeug und den Aufnahmestab geschaltet, können das Isolationselement und das Eindrehwerkzeug vorzugsweise lösbar in axialer Richtung zusammengesteckt sein. Um Drehmoment über die Fügestelle zwischen Isolationselement und Eindrehwerkzeug zu übertragen, sind das Isolationselement und das Eindrehwerkzeug bevorzugt drehfest miteinander verbunden. Insbesondere können das Isolationselement und das Eindrehwerkzeug durch Formschluss, Kraftschluss und/oder Stoffschluss miteinander verbunden sein.

Gleiches gilt für eine Verbindung zwischen dem Isolationselement und dem Aufnahmestab, sowohl wenn das Isolationselement zwischen das Eindrehwerkzeug und den Aufnahmestab geschaltet ist, als auch wenn das Isolationselement in den Aufnahmestab integriert ist. Um das Isolationselement und den Aufnahmestab zu verbinden, können das Isolationselement und der Aufnahmestab in axialer Richtung zusammengefügt sein. Hierfür können das Isolationselement und der Aufnahmestab beispielsweise in axialer Richtung zusammengesteckt sein. Zur Übertragung von Drehmoment über die Fügestelle zwischen Isolationselement und Aufnahmestab sind das Isolationselement und der Aufnahmestab bevorzugt drehfest miteinander verbunden. Insbesondere können das Isolationselement und der Aufnahmestab durch Formschluss, Kraftschluss und/oder Stoffschluss miteinander verbunden sein, beispielsweise indem sie miteinander verklebt oder aufgeschrumpft sind.

Gemäß einer weiteren Ausführungsform weist die Zuführeinrichtung wenigstens zwei Klinken zum Halten eines zugeführten Verbindungselements auf.

Auch die Klinken können jeweils als Isolationselement ausgebildet sein. Die zuvor in Bezug auf das Isolationselement beschriebenen Merkmale können einzeln oder in Kombination auch für die Klinken zutreffen.

Zum Halten ferromagnetischer Verbindungselemente kann das Eindrehwerkzeug auch magnetisch ausgebildet sein.

Alternativ oder zusätzlich kann das Schraubgerät ein Saugrohr zum Halten eines zugeführten Verbindungselements aufweisen. Das Saugrohr ermöglicht es, Verbindungselemente an schwer zugänglichen Stellen, wie beispielsweise in schmalen Vertiefungen, bereitzustellen und einzubringen. Im Vergleich zu einem magnetischen Eindrehwerkzeug hat die Verwendung eines Saugrohrs außerdem den Vorteil, dass mittels einer Vakuumüberwachungseinrichtung erfasst werden kann, ob ein Verbindungselement beim Transport von einem Bereitstellungsort bis zu einem Schraubort von dem Saugrohr abfällt. Dies ist insbesondere bei der Verschraubung von Batterien mit elektrisch leitfähigen Verbindungselementen relevant, weil letztere, wenn sie von dem Saugrohr abfallen, Kurzschlüsse in der Batterie erzeugen können.

Vorteilhafterweise wirkt das Saugrohr als Isolationselement. Die zuvor in Bezug auf das Isolationselement beschriebenen Merkmale können einzeln oder in Kombination somit auch für das Saugrohr zutreffen.

Grundsätzlich kann das Eindrehwerkzeug, welches beispielsweise als Bit, als Mutternschlüssel oder als Nuss ausgebildet sein kann, selbst als Isolationselement wirken. Beispielsweise kann das Eindrehwerkzeug aus einem Keramikmaterial gebildet sein. Ein solches Eindrehwerkzeug kann mit allen zuvor beschriebenen Ausführungsformen kombiniert werden.

Alternativ kann das Eindrehwerkzeug aus einem metallischen Werkstoff hergestellt und somit nicht elektrisch isolierend sein. Ein solches Eindrehwerkzeug hat den Vorteil, dass es verschleißarm und kostengünstig hergestellt werden kann.

Nachfolgend wird die Erfindung anhand rein beispielhafter Ausführungsformen unter Bezugnahme auf die beigefügten Zeichnungen beschrieben. Es zeigen:
- Fig. 1A: ein Schraubgerät gemäß einer ersten Ausführungsform der Erfindung in einer Grundstellung;
- Fig. 1B: das Schraubgerät aus Fig. 1A in einer Arbeitsstellung;
- Fig. 1C: einen Aufnahmestab gemäß der ersten Ausführungsform;
- Fig. 2A: ein Schraubgerät gemäß einer zweiten Ausführungsform der Erfindung in einer Grundstellung;
- Fig. 2B: das Schraubgerät aus Fig. 2A in einer Arbeitsstellung;
- Fig. 2C: eine Schnittansicht eines Saugrohres und des darin angeordneten Aufnahmestabes in der in Fig. 2A gezeigten Grundstellung;
- Fig. 3A: ein Schraubgerät gemäß einer dritten Ausführungsform der Erfindung in einer Grundstellung;
- Fig. 3B: das Schraubgerät aus Fig. 3A in einer Arbeitsstellung;
- Fig. 3C: eine Draufsicht eines Aufnahmestabs gemäß der dritten Ausführungsform;
- Fig. 3D: eine Schnittansicht des Aufnahmestabes von Fig. 3C.

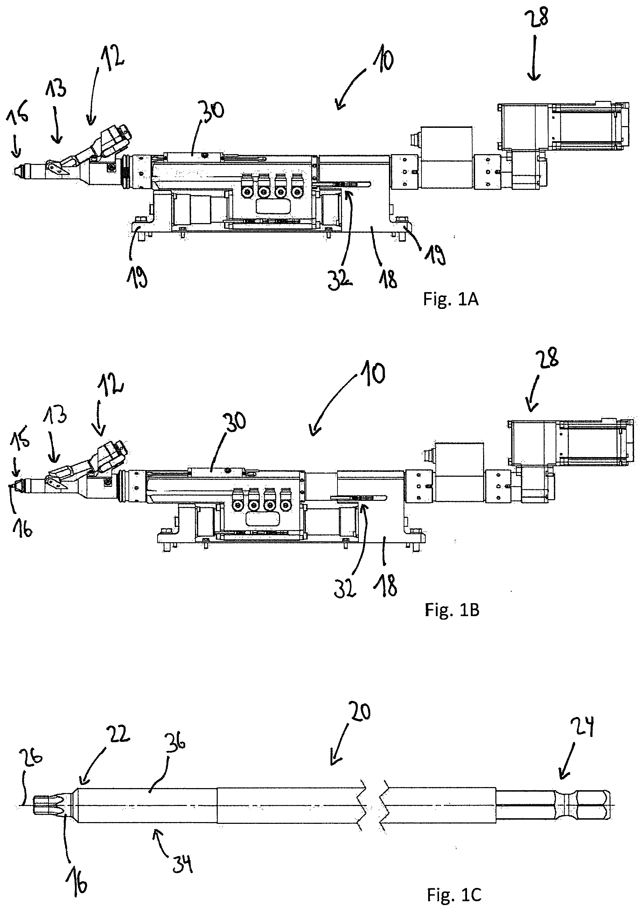

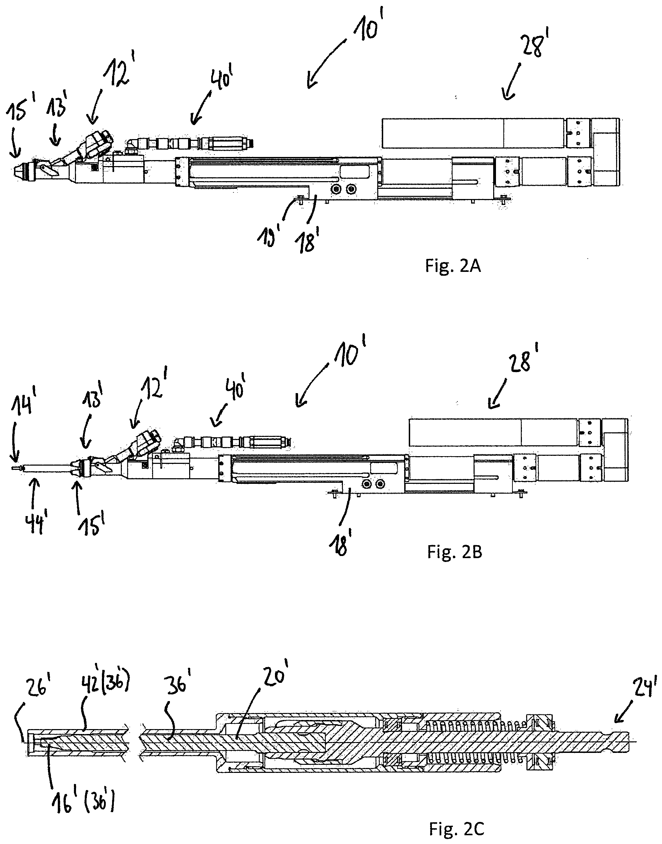

In den Figuren 1A bis 1C ist ein Schraubgerät 10 gezeigt, welches in Form eines so genannten Klinkenschraubers ausgebildet ist. Das Schraubgerät 10 umfasst eine pneumatische Zuführeinrichtung 12 zur automatischen Zuführung von nicht gezeigten Verbindungselementen 14 (Fig. 2B), beispielsweise Schrauben, Muttern oder anderen Elementen mit Außen- oder Innengewinde mit einem Zuführkopf 13. Um die Verbindungselemente 14 nacheinander dem Zuführkopf 13 zuzuführen, ist ein nicht gezeigter Aufnahmebehälter für die Verbindungselemente 14 vorgesehen. Dieser ist über einen ebenfalls nicht gezeigten Zuführschlauch mit dem Zuführkopf 13 verbunden. Mittels Druckluft werden die Verbindungselemente 14 einzeln durch den Zuführschlauch zu dem Zuführkopf 13 befördert. Am Zuführkopf 13 werden die Verbindungselemente 14 bereitgestellt und von einer Haltevorrichtung 15, welche bei einem Klinkenschrauber durch mindestens zwei passive Klinken gebildet ist, gehalten, um von einem Eindrehwerkzeug 16 (Fig. 1C) aufgenommen zu werden.

Ferner umfasst das Schraubgerät 10 ein Gehäuse 18. Das Gehäuse ist mit Flanschen 19 ausgestattet und kann mittels dieser beispielsweise an einem nicht gezeigten Roboterarm oder verfahrbaren Schlitten angebracht werden.

In dem Gehäuse 18 ist ein Aufnahmestab 20 (Fig. 1 C) drehbar gelagert, dessen vorderes Ende 22 mit dem Eindrehwerkzeug 16, hier einem Bit, drehfest verbunden ist. An seinem hinteren Ende 24 weist der Aufnahmestab 20 einen sechskantigen Querschnitt auf. Das hintere Ende 24 ist mit einer nicht gezeigten Abtriebswelle eines Rotationsantriebs drehfest verbunden, um den Aufnahmestab 20 um eine Rotationsachse 26 in Rotation zu versetzen. Zusätzlich zu dem Rotationsantrieb, welcher durch einen Elektromotor realisiert ist, ist ein Linearantrieb zum axialen Verfahren des Aufnahmestabs 20 und des damit verbundenen Eindrehwerkzeugs 16 entlang der Rotationsachse 26 vorgesehen. Der Linearantrieb ist in Form eines pneumatischen Antriebs ausgebildet. Der Rotationsantrieb und der Linearantrieb bilden zusammen eine Antriebseinheit 28 für den Aufnahmestab 20.

Wird das Schraubgerät 10 dazu verwendet, Komponenten elektrischer Bauteile, wie beispielsweise Hochvolt-Batterien für Elektrokraftfahrzeuge, zu verschrauben, kann es vorkommen, dass das Eindrehwerkzeug 16 mit ladungsbehafteten Teilen in Kontakt kommt.

Um einen Stromfluss durch das Schraubgerät 10 zu verhindern und somit Bedienpersonal sowie unter anderem die Sensorik des Schraubgeräts 10, beispielsweise einen Tiefenmelder 30 oder einen Rückmelder 32 für den Schrauberhub oder einen Drehmomentsensor, zu schützen, besteht der Aufnahmestab 20 in einem Abschnitt 34 aus einem isolierenden Material. Dieser Abschnitt 34 wird als Isolationselement 36 bezeichnet. Das Isolationselement 36 ist in den Aufnahmestab 20 integriert, d.h. der Aufnahmestab 20 und das Isolationselement 36 bilden gemeinsam eine geometrische Einheit, beispielsweise einen Zylinder. Das Isolationselement 36 ist in axialer Richtung, d.h. entlang der Rotationsachse 26, zwischen dem Eindrehwerkzeug 16 und dem hinteren Ende 24 in einem vorderen Bereich des Aufnahmestabs 20 angeordnet. Zusätzlich oder alternativ wäre es auch denkbar, das Eindrehwerkzeug 16 aus einem isolierenden Material herzustellen. In diesem Fall würde das Eindrehwerkzeug 16 (ebenfalls) ein Isolationselement 36 bilden.

Das Isolationselement 36 ist aus einem Keramikmaterial gebildet , welches eine Durchschlagfestigkeit von mindestens 10kV Stehstoßspannung aufweist. Das Isolationselement 36 ist mit dem Eindrehwerkzeug 16 und dem restlichen Teil des Aufnahmestabs 20 jeweils verklebt und somit stoffschlüssig fest verbunden.

Zusätzlich zu dem Abschnitt 34 des Aufnahmestabs 20 sind auch die Klinken 15 aus elektrisch isolierendem Material gebildet. Dabei können die Klinken 15 aus dem gleichen Material wie der Abschnitt 34 oder aus einem anderen isolierenden Material hergestellt sein.

In den Figuren 2A bis 2C ist eine zweite Ausführungsform eines Schraubgeräts 10' gezeigt. Gleiche oder ähnliche Komponenten sind mit korrespondierenden Bezugszeichen versehen. Die zweite Ausführungsform unterscheidet sich von der ersten Ausführungsform unter anderem darin, dass das Schraubgerät 10' eine Vakuumeinheit 40' aufweist, mittels derer ein Verbindungselement 14' während eines Setzprozesses an das Eindrehwerkzeug 16' angesaugt werden kann. Hierzu ist ein Saugrohr 42' vorgesehen, in dem mittels der Vakuumeinheit 40' ein Unterdruck erzeugt wird. Das Saugrohr 42' umgibt das Eindrehwerkzeug 16' und den Aufnahmestab 20' umfangsseitig und ragt stirnseitig über das Eindrehwerkzeug 16' hinaus. Ein mit einem Saugrohr 42' ausgestattetes Schraubgerät 10' wird auch als Vakuumschrauber 10' bezeichnet.

In dem gezeigten Ausführungsbeispiel bilden das Saugrohr 42' und das Eindrehwerkzeug 16' jeweils ein Isolationselement 36'. In anderen Worten bestehen das Saugrohr 42' und das Eindrehwerkzeug 16'jeweils aus einem isolierenden Material. Hierdurch wird sichergestellt, dass kein Strom über das Eindrehwerkzeug 16' und/oder das Saugrohr 42' in das Schraubgerät 10' fließen kann.

Vakuumschrauber 10' haben den Vorteil, dass sie ohne einen Zuführkopf mit Klinken auskommen und im Unterschied zu Klinkenschraubern Verbindungselemente 14' auch an schwer zugänglichen Stellen eingebracht werden können, da das einen vorderen Abschnitt 44' bildende Saugrohr 42' relativ schmal ausgebildet werden kann.

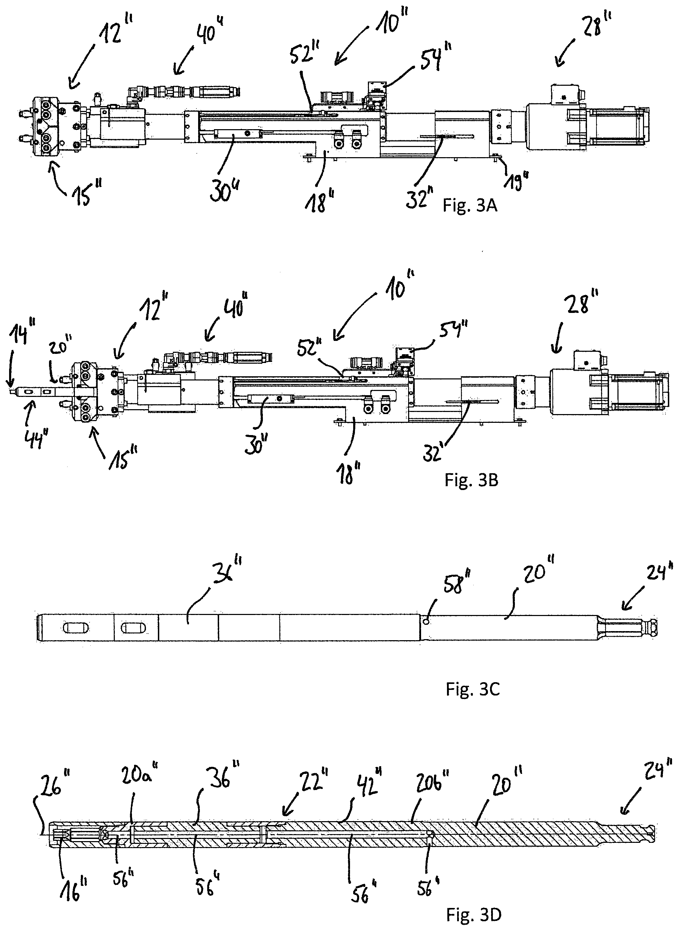

In den Figuren 3A bis 3D ist eine dritte Ausführungsform eines Schraubgeräts 10" gezeigt. Auch in diesen Figuren sind gleiche oder ähnliche Komponenten mit korrespondierenden Bezugszeichen versehen. Anstelle von passiven Klinken umfasst die Haltevorrichtung 15" hier aktive Backen, d.h. Backen, welche aktiv geöffnet und geschlossen werden können. Diese aktiven Backen tragen zu einer zuverlässigeren Erfassung eines Verbindungselements 14" durch das Eindrehwerkzeug 16" bei. Auch bei dieser Ausführungsform ist eine pneumatische Zuführeinrichtung 12" zur automatischen Zuführung von Verbindungselementen 14" vorgesehen, welche allerdings in den Figuren nicht dargestellt ist.

Wie in den Fig. 3A und 3B zu sehen ist, weist ähnlich wie die zweite Ausführungsform auch die dritte Ausführungsform eine Vakuumeinheit 40" auf. Diese Vakuumeinheit 40" umfasst einen Verbindungselementerkennungssensor 52". Mit diesem Verbindungselementerkennungssensor 52" kann detektiert werden, ob das Verbindungselement 14" von dem Saugrohr 42" angesaugt wird und demzufolge mit dem Eindrehwerkzeug 16" in Kontakt steht. Ein solcher Verbindungselementerkennungssensor 52" ist insbesondere dann vorteilhaft, wenn Verbindungselemente 14" an elektrischen Bauteilen wie Batterien gesetzt werden, da hier abfallende Verbindungselemente 14" einen Kurzschluss und somit Schäden erzeugen können. Durch den Verbindungselementerkennungssensor 52" wird überwacht, dass keines der zu setzenden Verbindungselemente 14" von dem Saugrohr 42" abfällt. Um bei jedem Ansaugprozess überprüfen zu können, dass ausreichend Unterdruck zum Ansaugen des Verbindungselements 14" bereitsteht, ist zusätzlich eine Vakuumüberwachungseinrichtung 54" vorgesehen.

In den Figuren 3C und 3D ist ein als Saugrohr 42" ausgebildeter Aufnahmestab 20" dargestellt. In den Aufnahmestab 20" ist ein Isolationselement 36" integriert. Konkret ist ein kürzerer vorderer Abschnitt 20a" des Aufnahmestabs 20" auf einen vorderen Endabschnitt des Isolationselements 36 und ein längerer hinterer Abschnitt 20b" des Aufnahmestabs 20" auf einen hinteren Endabschnitt des Isolationselements aufgeschrumpft. Auf das vordere Ende des vorderen Abschnitts 20a" des Aufnahmestabs 20" ist ein Eindrehwerkzeug 16" aufgesteckt. Zum Ansaugen eines Verbindungselements 14" ist ein Kanal 56" in dem Aufnahmestab 20" ausgebildet, welcher von einer Umfangsöffnung 58" in radialer Richtung bis zu einer Rotationsachse 26" in den Aufnahmestab 20" hinein verläuft und sich dann entlang der Rotationsachse 26" durch den Aufnahmestab 20", durch das Isolationselement 36" und durch das Eindrehwerkzeug 16" erstreckt.

Abschließend sei darauf hingewiesen, dass Merkmale, welche in Bezug auf eine der Ausführungsformen beschrieben wurden, auch mit Merkmalen von anderen Ausführungsformen kombiniert werden können.

### Bezugszeichenliste

- 10: Schraubgerät
- 12: Zuführeinrichtung
- 13: Zuführkopf
- 14: Verbindungselement
- 15: Haltevorrichtung
- 16: Eindrehwerkzeug
- 18: Gehäuse
- 19: Flansch
- 20: Aufnahmestab
- 20a: vorderer Abschnitt
- 20b: hinterer Abschnitt
- 22: vorderes Ende
- 24: hinteres Ende
- 26: Rotationsachse
- 28: Antriebseinheit
- 30: Tiefenmelder für den Schrauberhub
- 32: Rückmelder für den Schrauberhub
- 34: Abschnitt
- 36: Isolationselement
- 40: Vakuumeinheit
- 42: Saugrohr
- 44: vorderer Abschnitt
- 52: Verbindungselementerkennungssensor
- 54: Vakuumüberwachungseinrichtung
- 56: Kanal
- 58: Umfangsöffnung

## Patentansprüche

1. Schraubgerät (10) mit
einem Eindrehwerkzeug (16),
einem Gehäuse (18),
einer Antriebseinheit (28), welche einen Rotationsantrieb zum Rotieren des Eindrehwerkzeugs (16) um eine Rotationsachse (26) und einen Linearantrieb zum Verfahren des Eindrehwerkzeugs (16) entlang der Rotationsachse (26) umfasst, und
einer Zuführeinrichtung (12) zur automatischen Zuführung von Verbindungselementen (14) zu dem Eindrehwerkzeug (16),
**dadurch gekennzeichnet,**
**dass** wenigstens ein Isolationselement (36) vorgesehen ist, welches einen Stromfluss über das Eindrehwerkzeug (16) zu anderen Bauteilen des Schraubgeräts (10), beispielsweise zu der Antriebseinheit (28), zu dem Gehäuse (18), zu der Zuführeinrichtung (12) und/oder zu einem Sensor, verhindert.

2. Schraubgerät (10) nach Anspruch 1,
**dadurch gekennzeichnet, dass** das Gehäuse (18), die Antriebseinheit (28) und/oder die Zuführeinrichtung (12) geerdet ist bzw. sind.

3. Schraubgerät (10) nach Anspruch 1 oder 2,
**dadurch gekennzeichnet, dass** das Isolationselement (36) eine Luftstrecke von mindestens 10,4 mm aufweist.

4. Schraubgerät (10) nach zumindest einem der vorstehenden Ansprüche, **dadurch gekennzeichnet, dass** das Isolationselement (36) eine minimale Kriechstrecke entsprechend der folgenden Tabelle aufweist:
| Isolierstoff Klasse | CTI | Kriechstrecke |
|---|---|---|
| I | ≥ 600 | ≥ 16 mm |
| II | 400 - 600 | ≥ 22 mm |
| IIIa | 175 - 400 | ≥ 32 mm |
| IIIb | 100 - 175 | ≥ 32 mm |
wobei CTI (Comparative Tracking Index) die Kriechstromfestigkeit gemäß der Norm IEC 60112 darstellt.

5. Schraubgerät (10) nach zumindest einem der vorstehenden Ansprüche,
**dadurch gekennzeichnet, dass** das Isolationselement (36) aus einem Material besteht, welches eine Durchschlagfestigkeit von 10kV Stehstoßspannung aufweist.

6. Schraubgerät (10) nach zumindest einem der vorstehenden Ansprüche,
**dadurch gekennzeichnet, dass** das Isolationselement (36) aus einem Material besteht, welches zu der Gruppe der teilentladungsfreien Isolatoren gehört und welches insbesondere zu der Gruppe der Keramiken gehört.

7. Schraubgerät (10) nach zumindest einem der vorstehenden Ansprüche,
**dadurch gekennzeichnet, dass** ein Aufnahmestab (20) vorgesehen ist, dessen eines Ende (24) mit der Antriebseinheit (28) gekoppelt ist und an dessen anderem Ende (22) das Eindrehwerkzeug (16) angebracht ist.

8. Schraubgerät (10) zumindest einem der vorstehenden Ansprüche,
**dadurch gekennzeichnet, dass** das Isolationselement (36) in den Aufnahmestab (20) integriert ist und insbesondere in axialer Richtung zwischen dem Eindrehwerkzeug (16) und der Antriebseinheit (28) angeordnet ist.

9. Schraubgerät (10) nach zumindest einem der vorstehenden Ansprüche,
**dadurch gekennzeichnet, dass** das Isolationselement (36) in axialer Richtung mit dem Eindrehwerkzeug (16) und/oder mit dem Aufnahmestab (20) zusammengefügt ist.

10. Schraubgerät (10) nach zumindest einem der vorstehenden Ansprüche,
**dadurch gekennzeichnet, dass** die Zuführeinrichtung (12) wenigstens zwei Klinken (15) zum Halten eines zugeführten Verbindungselements (14) aufweist.

11. Schraubgerät (10) nach Anspruch 10,
**dadurch gekennzeichnet, dass** die Klinken (15) jeweils als Isolationselement (36) wirken.

12. Schraubgerät (10) nach zumindest einem der vorstehenden Ansprüche,
**dadurch gekennzeichnet, dass** das Schraubgerät (10) ein Saugrohr (42) zum Halten eines zugeführten Verbindungselements (14) aufweist.

13. Schraubgerät (10) nach Anspruch 12,
**dadurch gekennzeichnet, dass** das Saugrohr (42) als Isolationselement (36) wirkt.

14. Schraubgerät (10) nach zumindest einem der vorstehenden Ansprüche,
**dadurch gekennzeichnet, dass** das Eindrehwerkzeug (16) als Isolationselement (36) wirkt.
